# EUROPEAN PATENT APPLICATION

(11) **EP 3 624 037 A1**
(43) Date of publication of application: **18.03.2020**
(21) Application number: 18194926.4
(22) Date of filing: 17.09.2018
(51) Int. Cl.: G06Q 20/00

(54) **PAYMENT DEVICES USING OPTICAL CODES**

(71) Applicant: Mastercard International Incorporated, Purchase NY 10577 (US)
(72) Inventor: HAY, Florent, 1020 Laeken (BE); VAN DE VELDE, Eddy, 3000 Leuven (BE)
(74) Representative: Lawrence, Richard Anthony

(57) **Abstract**

There is presented a smart card adapted for staging a transaction for performance in connection with a terminal of a transaction system. The smart card comprises a processor and a memory. The memory comprises transaction staging code and user payment credentials. The smart card also comprises a biometric input device, a display, and a clock. On successful biometric input through the biometric input device, the processor is adapted to run the transaction staging code to provide transaction staging information comprising the user payment credentials and a freshness factor derived from a time value from the clock. The transaction staging information is displayed on the display as an optical code for reading at the terminal of the transaction system. A method of using such a smart card to stage a transaction is also described.

## Description

### TECHNICAL FIELD

The present disclosure relates to payment devices using optical codes, and in particular embodiments to payment devices adapted to stage a transaction by generating and displaying an optical code.

### BACKGROUND

It is now commonplace to conduct payment transactions electronically such as by using, for example, a debit card, a credit card or an electronic wallet on a mobile device. Two main types of electronic payment transactions currently dominate the payments industry when using debit or credit cards: magnetic-stripe transactions and EMV transactions. EMV is a technology toolbox that enables globally interoperable secure payments across both face-to-face and remote environments. EMV standard specifications are managed by EMVCo for relevant industries, and can be found at https://www.emvco.com/document-search/ - EMV refers to all of the specifications administered by EMVCo. Magnetic-stripe (or magstripe) transactions involve using a card that is capable of storing data on a band of magnetic material - the magnetic stripe - on the card. To perform a magnetic-stripe transaction, the payment card is swiped into a terminal by a cardholder.

There are two categories of EMV transactions: contact transactions and contactless transactions. Contact EMV transactions, like magnetic-stripe transactions, require that the card be in contact with the terminal for the transaction to occur. Cards of this type typically operate under the EMV standard for interoperation of chip cards and associated apparatus (such as POS terminals and ATMs). ISO/IEC 7816 provides a communication standard for cards of this type. In contrast, contactless transactions rely on near field communication (NFC) technology - under EMV, these are covered under the ISO/IEC 14443 standard. To perform a contactless EMV transaction, the payment card is tapped against a terminal by the cardholder when prompted to do so. Typically, a payment transaction performed using an electronic wallet (e-wallet) application uses NFC technology to provide payment credentials from an electronic device to a merchant's point-of-sale (POS) terminal. At present there are several issues with using NFC for performing payment transactions.

Firstly, the user's electronic device and the merchant's POS terminal must both be compatible with NFC technology for the transaction to be performed. There are many electronic devices that are not compatible with NFC such as, for example, Apple's iPhone up to and including iPhone 5S. More recent models of Apple's iPhone, such as from the iPhone 6 up to and including iPhone 7 plus, include NFC capability; however the NFC capability of these iPhone models is exclusive to ApplePay and cannot be accessed by e-wallets other than ApplePay. Although contactless mobile payments are becoming more popular, not all merchants are able to accept NFC payments as they would require a compatible card reader, which may for some merchants be more expensive requiring the introduction of a POI device in comparison with the ease of reusing an already present barcode reader.

Alongside NFC technology, some e-wallets support the use of optical codes, such as one-dimensional or two-dimensional barcodes. A Quick Response Code (QRC, or QR code) is an example of a two-dimensional barcode which can be used to perform electronic payment transactions. Any smartphone is capable of installing the software required for displaying a QR code, and any smartphone equipped with a camera is capable of installing the software required for reading a QR code. Performing a transaction by QRC is quick, easy and convenient for the user. There are some practical challenges to use of QR codes and other optical codes. As these are essentially unidirectional (a code is generated by one party and read by the other), information exchange is different from bidirectional mechanisms such as short range wireless communication, as used for NFC. Security considerations also constrain application of this use model to ensure that it is used securely.

It would be desirable to address considerations currently constraining the use of optical code technology by payment devices in staging transactions so that the benefits of this approach can be seen more widely.

### SUMMARY OF THE DISCLOSURE

According to a first aspect of the present disclosure there is provided a smart card adapted for staging a transaction for performance in connection with a terminal of a transaction system, the smart card comprising: a processor and a memory, the memory comprising transaction staging code and user payment credentials; a biometric input device; a display; and a clock; wherein on successful biometric input through the biometric input device, the processor is adapted to run the transaction staging code to provide transaction staging information comprising the user payment credentials and a freshness factor derived from a time value from the clock, wherein the transaction staging information is displayed on the display as an optical code for reading at the terminal of the transaction system.

This approach enables a smart card to stage a transaction in a way that is convenient for the user, provides a high quality of authentication, and which allows interaction with a merchant with capability to read an optical code so that the merchant can initiate a transaction.

In embodiments, the freshness factor is an unpredictable number derived from the time value. The user payment credentials may comprise Track 2 magnetic stripe card data. These user payment credentials may then comprise dynamic magnetic stripe data with the unpredictable number included within the Track 2 magnetic stripe data.

In embodiments, the optical code is a 1-D barcode.

The biometric sensor may provide a consumer device customer verification method. In certain embodiments, the biometric sensor initiates staging of a transaction. The biometric sensor may be a fingerprint sensor.

In a second aspect, the disclosure provides a method of using a smart card to stage a transaction, wherein the smart card comprises a processor, a memory comprising user payment credentials, a biometric input device, a display and a clock, the method comprising: initiating staging of the transaction; obtaining a biometric input of a user at the biometric input device to verify the user; obtaining a time value from the clock, and using the time value to create a freshness factor; using the user payment credentials and the freshness factor to generate transaction staging information; and rendering the transaction staging information as an optical code, and displaying the optical code on the display for reading by a terminal of a transaction system.

The freshness factor may be an unpredictable number, and the user payment credentials may comprise Track 2 magnetic stripe card data. The user payment credentials may then comprise dynamic magnetic stripe data with the unpredictable number included within the Track 2 magnetic stripe data.

The optical code may be a 1-D barcode.

The biometric input may be used as a Consumer Device Cardholder Verification Method.

In embodiments, obtaining the biometric input of the user may also comprise initiating staging of the transaction.

### BRIEF DESCRIPTION OF THE DRAWINGS

One or more embodiments of the disclosure will now be described, by way of example only, with reference to the accompanying drawings, in which like components are assigned like numerals and in which:
Figure 1 illustrates a typical four-party model used in payment interactions between entities operating in a card scheme;
Figure 2 shows an implementation of the transaction system of Figure 1 adapted for performing embodiments of the disclosure;
Figures 3A and 3B show, respectively, functional elements of a user computing device and a terminal device for use in the transaction system implementation of Figure 2;
Figure 4 shows an exemplary payment device according to an embodiment of the disclosure;
Figure 5 illustrates steps in performance of a transaction using the payment device of Figure 4 according to one use model;
Figure 6 shows a sequence diagram for authenticating and performing a transaction on a user device in accordance with an embodiment of the disclosure;
Figure 7 illustrates the method generateMagstripeUN() for returning an unpredictable number for a Magstripe optical code transaction in accordance with an embodiment of the disclosure; and
Figure 8 shows a point-of-interaction (POI) processing decision tree for a Magstripe optical code transaction, in accordance with an embodiment of the disclosure.

### DETAILED DESCRIPTION

The approach described provides a payment card adapted to stage a transaction securely using optical code technology for performance with a terminal of a transaction system.

The approach taken to performing an electronic payment involves using a suitably constructed and configured payment card to make more secure and convenient payment transactions using optical codes. The approach described involves generating and displaying an optical code comprising the payment transaction credentials on a user device. The optical code may be a non-complex graphic sign that contains encoded information, such as an optical glyph, or a one-dimensional or multidimensional barcode. Once the optical code is displayed, it can be scanned by a merchant device to perform a payment transaction.

In embodiments described below, the optical code is a one-dimensional barcode (such as a Code 128 barcode, or any code that uses a series). Alternative embodiments may use a two-dimensional barcode (2-D), such as a Quick Response Code (QR code or QRC).

A payment card adapted for this purpose will be described in detail. The payment card described in embodiments is adapted for 1D barcode generation, with specific embodiments indication a card suitable for user authentication by biometric and for secure code generation. Other optical codes - for example a 2D barcode such as a QR code - could be used in different embodiments following the same approach as indicated below. However, the approach indicated below uses data efficiently enough to allow necessary transaction information to be encoded into a 1D barcode.

General and specific embodiments of the disclosure will be described below with reference to the Figures.

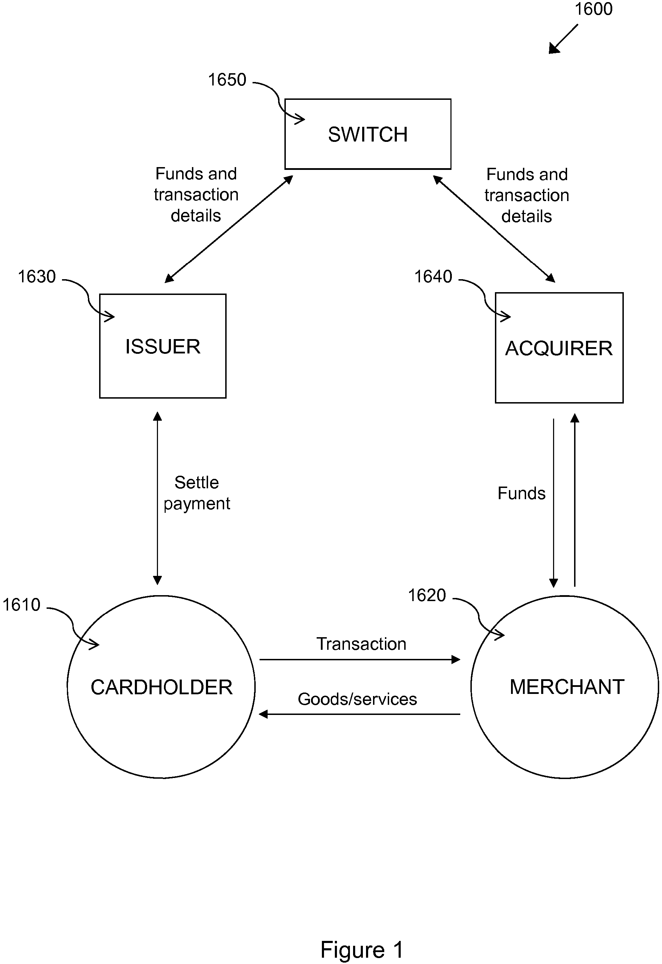

Figure 1 is a schematic block diagram of a typical four-party model or four-party payment transaction scheme. The diagram illustrates the entities present in the model and the interactions occurring between entities.

Normally, card schemes - payment networks linked to payment cards - are based on one of two models: a three-party model (adopted by American Express) or a four-party model (adopted by Visa and Mastercard). For the purposes of this document, the four-party model is described in further detail below.

The four-party model may be used as a basis for the transaction network. For each transaction, the model comprises four entity types: cardholder 1610, merchant 1620, issuer 1630 and acquirer 1640. In this model, the cardholder 1610 purchases goods or services from the merchant 1620. The issuer 1630 is the bank or any other financial institution that issued the card to the cardholder 1610. The acquirer 1640 provides services for card processing to the merchant 1620.

The model also comprises a central switch 1650 - interactions between the issuer 1630 and the acquirer 1640 are routed via the switch 1650. The switch 1650 enables a merchant 1620 associated with one particular bank (acquirer 1640) to accept payment transactions from a cardholder 1610 associated with a different bank (issuer 1630).

A typical transaction between the entities in the four-party model can be divided into two main stages: authorisation and settlement. The cardholder 1610 initiates a purchase of a good or service from the merchant 1620 using their card. Details of the card and the transaction are sent to the issuer 1630 via the acquirer 1640 and the switch 1650 to authorise the transaction. Should the transaction be considered abnormal by the issuer 1630, the cardholder 1610 may be required to undergo a verification process to verify their identity and the details of the transaction. Once the verification process is complete the transaction is authorised.

On completion of the transaction between the cardholder 1610 and the merchant 1620, the transaction details are submitted by the merchant 1620 to the acquirer 1640 for settlement.

The transaction details are then routed to the relevant issuer 1630 by the acquirer 1640 via the switch 1650. Upon receipt of these transaction details, the issuer 1630 provides the settlement funds to the switch 1650, which in turn forwards these funds to the merchant 1620 via the acquirer 1640.

Separately, the issuer 1630 and the cardholder 1610 settle the payment amount between them. In return, a service fee is paid to the acquirer 1640 by the merchant 1620 for each transaction, and an interchange fee is paid to the issuer 1630 by the acquirer 1640 in return for the settlement of funds.

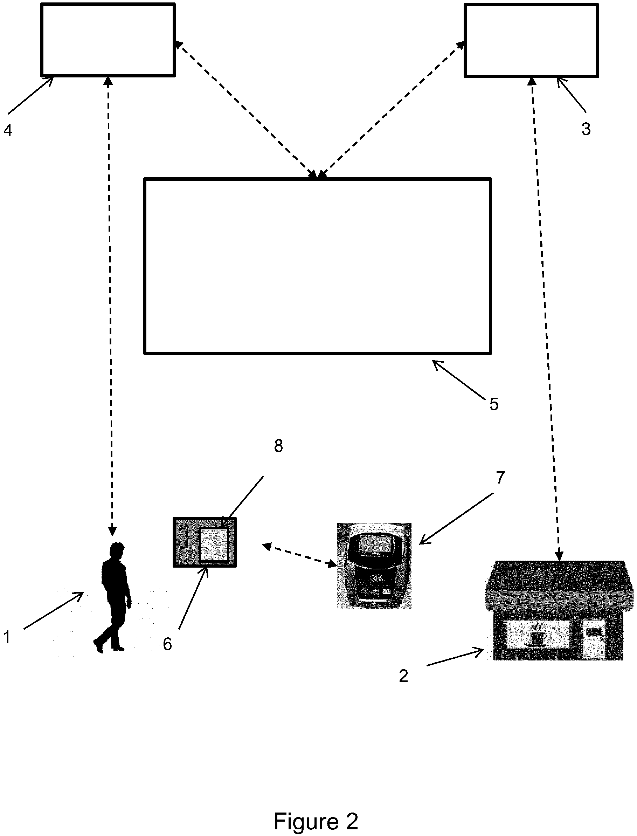

Figure 2 shows a transaction system architecture according to an embodiment of the disclosure appropriate for interaction between a user payment device and a merchant point of sale (POS) terminal.

The cardholder 1 has a user payment device 6 in the form of a payment card as will be described further below - the user payment device has a display 8. Conventionally, the user payment device is adapted to communicate with a merchant POS terminal by a contact or contactless EMV protocol - this is not described further in this disclosure (though in embodiments conventional contact or contactless technologies may be offered as an alternative), which relates to use of an optical code at the payment device to stage a transaction. In consequence, this payment device 6 has a processor and memory and the functionality to stage a transaction, but need not have a conventional credit card form factor, though as described below, there may be practical benefits in adopting some or all aspects of a credit card form factor. The payment device 6 uses the display 8 to show an optical code to be read by the merchant POS terminal 7. The merchant POS terminal 7 therefore needs to have the capability to read the optical code. In Figure 2, the POS terminal is shown as a mobile POS terminal device, but the POS terminal could also be a fixed device. What is necessary is for the POS terminal to have, integrally or in association, a camera or other means for detecting an optical code, along with the processing capability to interpret the optical code.

The transaction infrastructure 5 provides the computing infrastructure necessary to operate the transaction system (such as a card scheme) and may provide routing of transactions and other messaging to and between parties such as the acquirer 3 and the issuer 4.

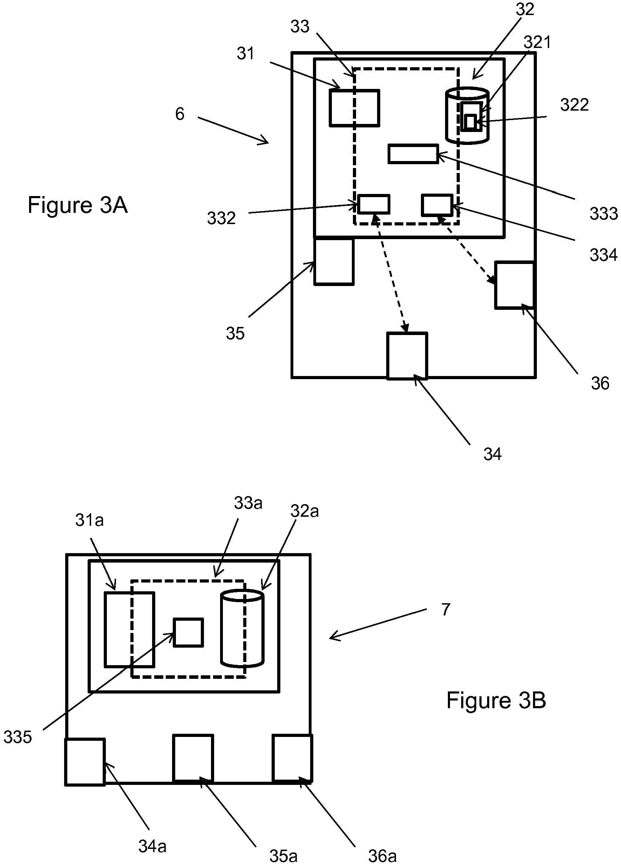

Figures 3A and 3B illustrate schematically by function a user payment device and a merchant POS device in accordance with embodiments of the disclosure. Other elements of the architecture of Figure 2 may be organised in an essentially conventional manner for an EMV transaction architecture.

Figure 3A shows a user payment device 6. The payment device 6 possesses at least one processor 31 and at least one memory 32, between them defining a computing environment 33 for performance of applications. Applications running in the computing environment include a payment application 333 as well as a user interface application 332 and a biometric application 334. The user interface application 332 supports provision of user input from and display output to a user interface 34, which provides a visual output to display 8. Approaches to user input in different embodiments may vary significantly, as is discussed further below - there may in some embodiments be effectively no user input. The memory in embodiments described may comprise a physically and logically protected environment 321 for protection of sensitive data required by these applications - such secure environments may be implemented in a variety of ways (as the skilled person will appreciate) and are not shown explicitly here, but access to secure data handling is desirable for any situation in which sensitive data is being handled. In the arrangement shown here, the protected environment 321 contains a one-time password generating system 322. Alternatively, the whole computing environment 33 may be designed to be physically and logically protected. The payment device is here provided with a biometric sensor, in this case fingerprint reader 36. This may have been pre-programmed at initialisation of the device with fingerprint data of a user - held securely in the payment device - so that the fingerprint reader 36 can be used to verify that the payment device 6 is being used by the legitimate user. The fingerprint reader 36 interacts with the biometric application 334 in the device. The user payment device 6 also contains a clock 35 in the form of a hardware token providing a time output that can be used by applications in the computing environment.

Figure 3B shows a POS terminal 7 adapted to implement an embodiment of the disclosure - as discussed above, this may be a static or mobile device. The POS terminal 7 also possesses at least one processor 31a and at least one memory 32a, between them defining a computing environment 33a for performance of applications. The applications here include a point of sale (POS) application 335. This terminal will typically contain a wireless communication interface 35a for making an NFC or other wireless connection with a user payment device, but here will specifically include an optical code reader 34a for reading optical code output from a user payment device 6 - either the POS application 335 or an application called by it has the capability to interpret the optical code to allow the POS terminal to perform a transaction. The POS terminal will have a user interface 36a, typically including a display visible to the user of the user payment device. Relevant features of the POS application 335 will be described in relation to the use case discussed below.

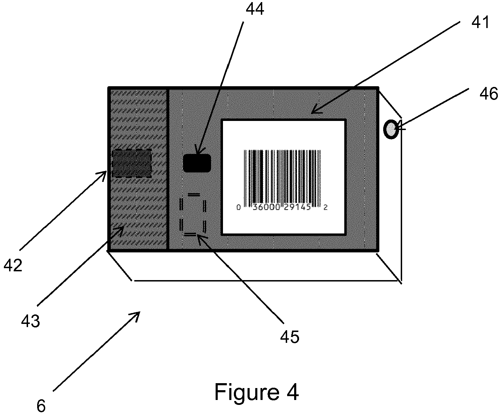

Figure 4 shows an embodiment of a payment device 6 according to the disclosure. The payment device 6 is in the form of a smart card - in this embodiment, the smart card (also known as a chip card, or integrated circuit card) is a card, normally of plastics material, conforming to the ID-1 format of the ISO/IEC 7810 standard for identification cards. The payment device has a display 41 and an embedded chip 42 comprising a processor and a memory - the embedded chip is here provided with a physical protection layer 43 to prevent tampering, though in other embodiments other mechanisms may be used to ensure that the embedded chip 42 is physically or logically protected from tampering (or both). There may be multiple embedded chips for example, there may be discrete chips to provide one time password capabilities, or biometric reader capabilities (in the embodiment described here it is presumed that these capabilities are combined into one physical device) - the clock may however most readily be provided as a discrete physical item. In this case the payment device is powered by a battery 44 - in embodiments this battery 44 may be inductively charged, or other powering mechanisms may be used, provided that sufficient power can be delivered to power up the biometric sensor and the display. The payment device has at least one means to provide user input - in this case, this is an activation button 46, though as will be described below, a more complex user interface may be provided to extend the functionality of the device. The payment device also comprises a fingerprint reader 45 so that a user can provide a biometric input.

As can be noted from Figure 4, in this embodiment the payment device 6 is not a contact device and so has no surface contact pattern allowing electrical contact to the embedded chip 42. The payment device is also not a contactless device either, and relies on the provision of optical codes for staging of transactions. As the payment device 6 is adapted in transactions only to provide, and not to receive, data, the payment device 6 may be harder to compromise. For example, subversion of a transaction-related interaction would not be effective to compromise the payment device 6, as the payment device would not receive information from the terminal during this interaction.

In other embodiments, the payment device may be adapted to use a contact or even a contactless interface in accordance with EMV specifications - conventional EMV hardware and software can be used. It is then necessary to establish a hierarchy of precedence for carrying out a transaction - this may be for a contact interface to be used if the card is brought into contact with a terminal contact interface, a contactless interface to be used if the payment device is placed within range of a terminal contactless interface, and an optical transaction otherwise. This may also put the decision under control of the user: for example, where the merchant has a simple barcode scanner but little other transaction technology, then barcode scanning may be the most effective approach; where the merchant has a contact terminal, this may be preferred approach; but where the merchant has an NFC reader, a contactless transaction may be the fastest and simplest option. Possession of all these options means that there is little risk that a transaction will not be achievable.

Where payment device 6 only uses optical codes, there is not an absolute need for the payment device 6 to use the standardized credit card form factor, as it is not essential for the payment device 6 to fit into a credit card sized slot on a terminal device in order to make a contact connection with it. In practice, even in these cases it may be desirable for the payment device to have the same or similar dimensions as a standardized credit card (as indicated above, the ISO/IEC 7810 standard defines physical characteristics of identification cards, with ID-1 being the form factor used by credit cards). Another possibility is for the payment device 6 to have an ID-1 height and width, but for the payment device 6 to have a greater thickness to allow room for a display and a battery (though with existing components it is also feasible for a battery, fingerprint sensor and display all to be included in an ID-1 form factor). The payment device would then be sized appropriately for existing credit card uses (such as noncontact use with terminals, and to fit in a credit card dimensioned slot in the user's physical wallet), but may be able to use extra thickness to provide sufficient volume to house a larger battery or a thicker display.

This approach allows for consumer interaction with the payment device 6 in a way that is not possible with a conventional payment card. Such interaction is possible with a user mobile phone used as a payment device, but this requires the user to have a suitable mobile phone available able to run the required mobile payment application, and as will be discussed below security considerations may then arise that may be avoidable using payment devices according to embodiments of the disclosure. The presence of a biometric input allows the user to perform a cardholder verification action directly at the payment device 6, and the ability for the user to make input at the payment device allows the user to take control of key process steps such as generation of a 1D barcode. The display allows the possibility of display to the user, so for example the user may be provided with a visual indication of transaction progress or action status. The cardholder verification quality of this approach is good - it will be more reliable and effective than use of a signature, and more convenient for the user than a PIN with online verification (though options such as these could be used as a backup should biometric verification not be available).

This embodiment shows a single embedded chip 42, though as indicated above in other embodiments the described functionality may be provided by multiple components. In embodiments with a physical protection layer 43, this may enclose some or all of such multiple components. Where a computing element is physically protected in this way, it can be used as a trustably secure element that can be treated as protected against physical or logical subversion, such that secrets held within a memory the secure element (such as cryptographic keys and user secrets) and processes carried out within a processor of the secure element (such as cryptographic processes) may be trusted to a significantly greater degree than secrets and processes in an unprotected computing environment could be. This allows for use of a simple security model - based on an assumption that secrets and processes in the secure element will not be discovered or subverted - that will not generally be available in a mobile phone computing environment, as secure elements other than a SIM card (which is typically specified by a cellular telephone system operator and not available for use by other proprietary applications) are typically not present in this environment, and equivalence to secure elements is typically only achieved by virtualisation processes and involvement of third parties through a communication infrastructure.

As noted above, the payment device 6 as shown in Figure 4 is not adapted to for conventional contactless transactions using NFC protocols, but only for provision of an optical code (in this case, a 1D barcode) for reading by a suitably configured merchant POS terminal 7 to initiate a transaction - a use model illustrating this approach is set out below.

As is discussed, alternative embodiments may also have an NFC interface, in which case there will be some modification to the use model to determine which interaction mechanism is used for a given transaction. In some embodiments, there may be no specific button to generate an optical code, with the generation and display of the optical code simply triggered by a successful user biometric verification. If this is done, then an optical code may be systematically generated for every payment. In that case, if the contactless controller of the card acquires a contactless signal, the card may simply stop displaying the optical code. The transaction system can ensure that this will not result in two transactions. If one possible transaction (eg the contactless transaction) is processed by the transaction system, the other possible transaction (that staged by the optical code) would be invalidated, as it would have the same ATC (Application Transaction Counter) number as the contactless transaction that had been processed. This would prevent, for example, use of a stolen optical code image.

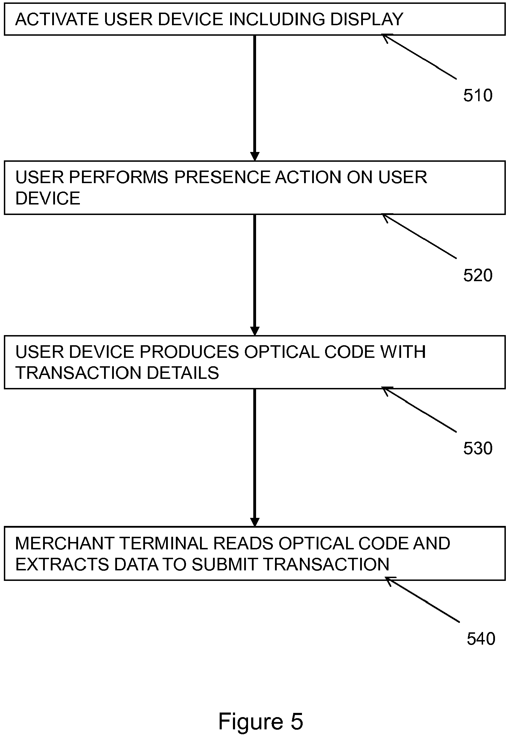

This potential use model is described below with respect to Figure 5. The transaction may begin with a merchant action, such as the merchant entering details of a transaction so that these details then appear on the display of a QR-enabled merchant POS terminal. The user may activate 510 his or her payment device to stage this transaction on the payment device, this activation being, for example, by pressing an activation button 46 to power up the transaction device. In particular, this action may be used to power up the display 41. It will be desirable to maximise battery life if the device is adapted for minimal battery consumption outside periods of use to perform a transaction. The user then performs 520 an action to confirm that he or she is physically present, such as pressing their finger against biometric sensor 45 to show that they are present (note that in some embodiments, as described below, the activation and the biometric step may be linked together). The payment device is adapted to use data for staging a transaction for the user along with other card details to produce 530 an optical code such as a 1D barcode that contains these and other details of the payment device encoded within it. This optical code is then read 540 by a barcode reader associated with the merchant POS terminal. The merchant POS terminal will extract information needed to complete the transaction from the barcode. The user can then indicate - for an example by pressing the activation button 46 again - that the barcode has been read. The device may be switched off at this point.

The merchant POS could then provide an indication of transaction success on its display, as for a conventional contactless transaction. The merchant could also (or instead) send an email or an SMS to the user when a transaction has been successfully processed. This could be done particularly easily if relevant cardholder information - such as a cardholder mobile phone number or e-mail address - were itself encoded into the optical code (this may be challenging to achieve in a 1D barcode, but would be straightforward with a QR code). Again, this provides additional defence against malicious activity such as unauthorised use of a user payment device - though biometric verification may already be a sufficient defence against such use.

Various user interface possibilities are available. Instead of the user activating the card and then using the biometric sensor, the biometric sensor could also be used to activate the device - a fingerprint press on a fingerprint sensor could be used both to activate the payment device and then to take a biometric measurement for customer verification. This, and the display, may be the whole extent of the user interface - in other embodiments, further user interface elements may be provided. One possibility is for the payment device to be provided with means for a numerical input (such as a keypad built in to the card substrate - known from for example the applicant's patent publication WO2014/145673). With this approach, further measures can be taken to engage the user with a transaction - for example, by allowing the user to enter or confirm the transaction amount so that this value will be included in the optical code to be read by a payment terminal. This option will not be discussed further here, but it will be apparent to the person skilled in the art how the flow discussed below can be modified in such a way that this information can be included.

These steps will now be reviewed in more detail, and options taken in different embodiments discussed.

The action to authenticate the user may be an action defined in EMV specifications as a consumer device cardholder verification method (CDCVM). A consumer device cardholder verification method (CDCVM) is a method of cardholder verification in which the credentials associated with the user are entered directly into the user device and not via a merchant device. Use of a fingerprint as a biometric is one example of an existing CDCVM (others include other biometrics, and entry of a PIN at the user device). Use of a CDCVM provides the assurance that the correct cardholder is performing the transaction. Once the user has been authenticated, the user is able to initiate a payment transaction using the activation button.

The user device generates a barcode comprising the payment transaction credentials. In this approach, a 1D barcode is generated, but in alternative approaches a 2-D barcode (such as a QR code) may be generated.

In the embodiment described here, the 1D barcode is generated using Dynamic Magnetic Stripe Data (DMSD). DMSD comprises a cryptogram calculated based on a time stamp - this is then provided in the 1-D barcode. A DMSD transaction provides a higher level of security than using static track data.

A magnetic stripe card provides at least two types of track, as defined under ISO/IEC 7813 - typically Track 1 and Track 2, are used, and Track 3 is left unused. Formats for Track 1 and Track 2 are defined. Point-of-sale card readers may read Track 1, or Track 2, and sometimes both, in case one track is unreadable. The minimum cardholder account information needed to complete a transaction is present on both tracks. Track 1 has a higher bit density (210 bits per inch vs. 75), is the only track that may contain alphabetic text, and hence is the only track that contains the cardholder's name. Track 2 information is used in DMSD, and comprises a PAN, an expiration date, a service code and discretionary data, along with a redundancy check used for verification. The discretionary data field is typically used for PIN or card verification information.

A mechanism is needed to ensure that the data in a transaction is "fresh" - that is, to provide some confidence that it was generated at the time of the transaction and in conjunction with the POI at which the transaction is performed. Because barcode technologies are unidirectional the usual process as described in EMV of getting a value from the terminal and including it in the device's calculation of a cryptogram subsequently returned to the POI is not easy to do.

One approach to providing freshness is to use an "unpredictable number". An unpredictable number is a value created for each transaction to provide variability and uniqueness to the generation of a cryptogram. EMV protocols have a mechanism for providing unpredictable numbers, but this is not a part of DMSD protocols. One approach that can be applied in DMSD generation in lieu of using a discretely generated unpredictable number is to use an algorithm that generates an unpredictable number based on an obfuscated time value. A cryptogram calculation may be carried out, based on the precedent Unpredictable Number that has been computed, which may then be carried in Track 2 data. The method then returns formatted transaction data according to DMSD.

As the optical code is based in part on a time value, it should only be used for a limited period of time - as is discussed below, part of the validation process may be to establish that the time value in the optical code is close to the transaction time. It may not as a result be appropriate for the optical code to remain displayed for an extended period of time. One possibility would be for the optical code only to be displayed for a particular time period, and then for the display to go blank. Another would be for a new code to be generated based on an updated time value after a period of time, with the device only ceasing to display optical codes when indicated to stop (for example, by pressing the activation button or the biometric sensor).

In alternative embodiments, other types of optical code may be used, such as a OR code or other 2-D bar code. This would allow more data to be stored in the optical code, which could also allow other possibilities to be used for providing transaction data. An alternative that might then be possible would be to use EMV data, though the unpredictable number would be generated according to the approach used above, rather than in the EMV approach, which uses information from the terminal (which would not be possible in the unidirectional approach described here).

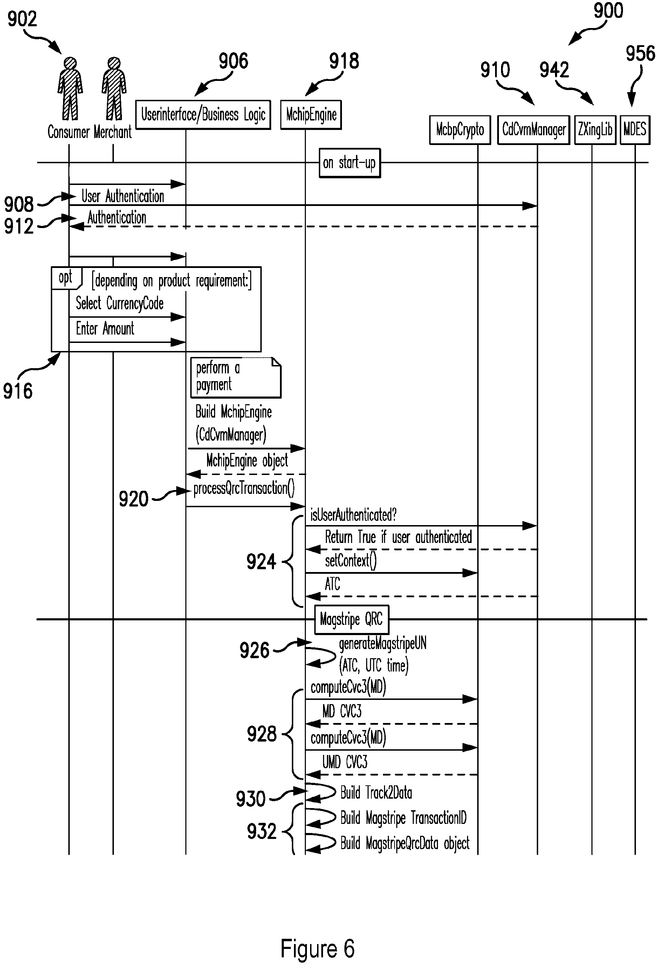

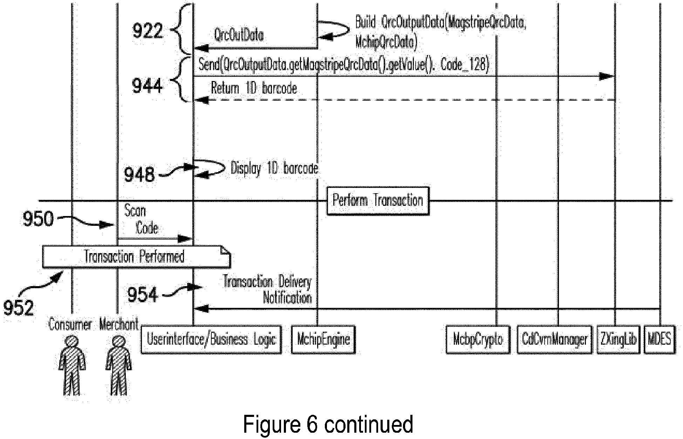

Figure 6 shows a sequence diagram for authenticating and performing a transaction on a user device in accordance with an embodiment of the disclosure. Figure 6 illustrates an exemplary embodiment of the general embodiment discussed in Figure 5. Figure 6 describes an object oriented approach that would be appropriate for use in a Java environment. Other embodiments may use different computing environments in which case they will not be represented directly by what is described below, but may be described by an equivalent functional representation appropriate to that environment. Exemplary classes that may be used for performing the transaction are described below.

First, the consumer activates the device to initiate a transaction, either by pressing an activation button or by starting the biometric reader. The consumer is verified by a consumer device cardholder verification method (CDCVM). A user authentication request (908) is submitted to a CDCVM Manager (910) - in this case, the biometric component present on the card. The consumer will be authenticated (912) if this is performed successfully - they will be informed of this by the subsequent generation of an optical code.

This biometric authentication initiates a payment transaction using an optical code. A class named *MchipEngine* (918) - this may be integrated within the payment application on the card - comprises a method called *processQrcTransaction* (920). The method *processQrcTransaction* (920) takes an entity class, *QrcInputData* (which can embed the time stamped UN), and returns an entity class, *QrcOutputData* (922), comprising formatted data to generate an optical code, as well as a Transaction ID specific to each barcode. If the transaction is allowed, the *QrcOutputData* (922) structure is built and returned. *QrcOutputData* (922) comprises Dynamic Magstripe Data.

*MagstripeQrc* is a class responsible for providing dynamic Magstripe data. The method *generatemagstripeUN()* (926) returns an unpredictable number for a Magstripe optical code transaction, given the system date and time. Using a byte array representing the generated unpredictable number, the method *computeCvc3* (928) computes and returns a card verification code (CVC3) cryptogram.

CVC3 is a type of card security code used for the purpose of minimising fraud in payment card transactions when the card is not physically present. The code is a three or more digit number that is a dynamic variant of the one that appears at the back of the card (CVC1). CVC3 is calculated at each contactless or Magstripe transaction. The card security code may also be known as, for example, the card verification data (CVD), card verification value (CVV) or signature panel code (SPC).

The formatted Track 2 data is then returned (930), which contains Dynamic CVC3. *MagstripeQrc* then builds the object *MagstripeQrcData* (932) which comprises dynamic Magstripe data.

The *QrcOutputData* (922) structure is built and returned. In this example, *QrcOutputData* (922) comprises Dynamic Magstripe Data (in *MagstripeQrcData*)*.* The data is then sent to a *library that generates barcodes* (942) for code generation. For 1-D barcode generation, the *MagstripeQrcData* component of *QrcOutputData* (922) is sent to *a library that generates barcodes* (942), which then returns a 1-D barcode (944). The 1-D barcode is then displayed (948) on the display (906).

The 1-D barcode may be scanned (950) by a merchant device. A payment transaction is then performed (952).

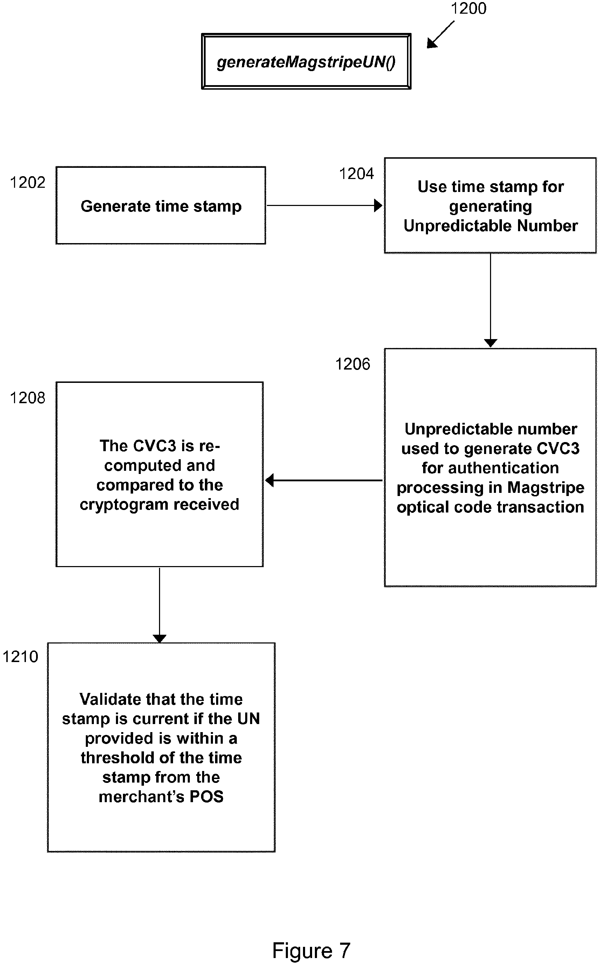

Figure 7 illustrates the method *generateMagstripeUN()* for returning an unpredictable number for a Magstripe QRC transaction in accordance with an exemplary embodiment of the disclosure.

In the method *generateMagstripeUN()* (1200), a UN may be generated by the consumer device. The time value, or time stamp, generated by the consumer device may be used as the UN for the generation of the CVC3 cryptogram.

An example of the method *generatemagstripeUN()* (1200) in use will now be described with reference to Figure 7.

First, a time stamp is generated (1202) by the payment device (smart card, in the embodiment shown) at the time of a transaction. The time stamp may be a number based on the hour and/or minute and/or second and/or date of the transaction and may be provided by, for example, a hardware token clock. This time stamp may be utilised (1204) as an input for generating the UN that will be utilized for this transaction. The UN and the ATC (Application Transaction Counter - this is a counter used in transaction protocols that is incremented with each transaction, with sequentiality checked at the host level to prevent reuse) are utilised to generate (1206) the CVC3 for use in authentication processing.

Upon receipt of the CVC3 value or cryptogram during authentication processing, the authentication system re-computes (1208) the CVC3 and compares it to the value received. This provides two authentication factors - it verifies that the consumer device used is a genuine consumer device (device authentication) and that the user has been authenticated too (user authentication). If the CVC3 is verified correct, the UN provided by the consumer device is assessed to determine if it is within a predetermined threshold amount or range of the time stamp provided by the merchant's POS terminal for the transaction, and if so, the authorisation system validates (1210) that the time stamp is current.

The time stamped UN is obfuscated and made transaction dependent so that a potential thief cannot easily observe or make use of the time value.

It should be noted that in some embodiments, the consumer device may be configured to generate a number for use as the UN that is not based on a time stamp or time value.

The consumer device may be configured to perform a cryptographic calculation to generate the CVC3 cryptogram for a particular transaction based on a cryptographic key, the generated UN as described above, the ATC, and static data stored on the consumer device.

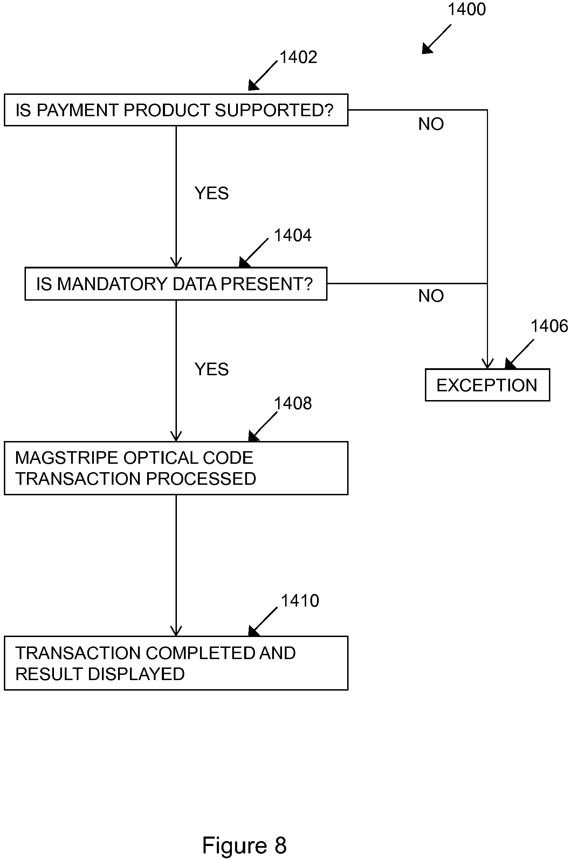

Figure 8 shows a point-of-interaction (POI) processing decision tree (1400) for a transaction in accordance with an embodiment of the disclosure.

POI transactions are here magnetic-stripe card-based payment transactions (Magstripe). A benefit of this approach is that it requires no change to the merchant infrastructure - the merchant only needs a barcode scanner to capture track data and send it to the acquirer

The first step is to check whether or not the payment product is supported (1402) (EMV-QRC). In this example, the selected payment product is Mastercard Consumer Presented Barcode/QR Code. A positive result proceeds to the next step, which is to check whether or not the mandatory POI data (track data for Magstripe) is present (1404). If the payment product is not supported, the POI throws an exception (1406). If the mandatory POI data is missing, the POI throws an exception (1406). The POI proceeds to process a Magstripe transaction (1408) if allowed.

The completion (1410) of a transaction involves transaction disposition. The POI is responsible for indicating the transaction disposition to the cardholder, which is from an authorisation response. A receipt is printed once the transaction is completed. In addition, the POI may be required to display POI messages, perform merchant specific processing and/or process additional data.

Further embodiments of the disclosure may be provided in accordance with the scope of the disclosure as defined here.

## Claims

1. A smart card adapted for staging a transaction for performance in connection with a terminal of a transaction system, the smart card comprising:
a processor and a memory, the memory comprising transaction staging code and user payment credentials;
a biometric input device;
a display; and
a clock; wherein
on successful biometric input through the biometric input device, the processor is adapted to run the transaction staging code to provide transaction staging information comprising the user payment credentials and a freshness factor derived from a time value from the clock, wherein the transaction staging information is displayed on the display as an optical code for reading at the terminal of the transaction system.

2. The smart card of claim 1, wherein the freshness factor is an unpredictable number derived from the time value.

3. The smart card of claim 1 or claim 2, wherein the user payment credentials comprises Track 2 magnetic stripe card data.

4. The smart card as claimed in claim 3, wherein the user payment credentials comprise dynamic magnetic stripe data with the unpredictable number included within the Track 2 magnetic stripe data.

5. The smart card of any preceding claim, wherein the optical code is a 1-D barcode.

6. The smart card of any preceding claim, wherein the biometric sensor provides a consumer device customer verification method.

7. The smart card of any preceding claim, wherein using the biometric sensor initiates staging of a transaction.

8. The smart card of any preceding claim, wherein the biometric sensor is a fingerprint sensor.

9. A method of using a smart card to stage a transaction, wherein the smart card comprises a processor, a memory comprising user payment credentials, a biometric input device, a display and a clock, the method comprising:
initiating staging of the transaction;
obtaining a biometric input of a user at the biometric input device to verify the user;
obtaining a time value from the clock, and using the time value to create a freshness factor;
using the user payment credentials and the freshness factor to generate transaction staging information; and
rendering the transaction staging information as an optical code, and displaying the optical code on the display for reading by a terminal of a transaction system.

10. The method of claim 9, wherein the freshness factor is an Unpredictable Number.

11. The method of claim 10, wherein the user payment credentials comprises Track 2 magnetic stripe card data.

12. The method of claim 11, wherein the user payment credentials comprise dynamic magnetic stripe data with the unpredictable number included within the Track 2 magnetic stripe data.

13. The method of any of claims 9 to 12, wherein the optical code is a 1-D barcode.

14. The method of any of claims 9 to 13, wherein the biometric input is used as a Consumer Device Customer Verification Method.

15. The method of any of claims 9 to 14, wherein obtaining the biometric input of the user also comprises initiating staging of the transaction.
